# EUROPÄISCHE PATENTSCHRIFT

(11) **EP 2 300 267 B1**
(45) Veröffentlichungstag und Bekanntmachung des Hinweises auf die Patenterteilung: **09.09.2015**
(21) Anmeldenummer: 09761441.6
(22) Anmeldetag: 06.06.2009
(51) Int. Cl.: B60N 2/225

(54) **VERSTELLBESCHLAG**
ADJUSTMENT FITTING
FERRURE DE RÉGLAGE

(30) Priorität: 13.06.2008 DE 102008028102; 13.06.2008 DE 102008028103
(43) Veröffentlichungstag der Anmeldung: 30.03.2011
(73) Patentinhaber: Brose Fahrzeugteile GmbH & Co. Kommanditgesellschaft Coburg, 96450 Coburg (DE)
(72) Erfinder: KRÜGER, Frieder, 96450 Coburg (DE); BLINZLER, André, 96271 Grub am Forst (DE); HARTLEB, Stephanie, 96279 Weidhausen (DE); SILLER, Jürgen, 95472 Rödental (DE); MÖLLER, Volker, 96450 Coburg (DE); ZELLMANN, Michael, 96120 Bischberg (DE); WEISS, Matthias, 96472 Rödental (DE)
(74) Vertreter: FDST Patentanwälte
(86) Internationale Anmeldenummer: PCT/EP2009/004088
(87) Internationale Veröffentlichungsnummer: WO 2009/149878

(56) Entgegenhaltungen:
- EP-A1- 1 676 503
- EP-A2- 1 647 438
- WO-A1-01/83259
- DE-A1- 10 105 282
- DE-A1-102007 035 138
- FR-A1- 2 432 951
- FR-A1- 2 510 374

## Beschreibung

Die Erfindung betrifft einen Verstellbeschlag, insbesondere für einen Fahrzeugsitz, mit einem ersten Beschlagteil, mit einem relativ zum ersten Beschlagteil um eine Drehachse drehverstellbaren zweiten Beschlagteil, wobei dem ersten Beschlagteil ein Außenrad mit einer Innenverzahnung zugeordnet ist, in welches ein dem zweiten Beschlagteil zugeordnetes Innenrad mit einer Außenverzahnung nach Art eines Taumelgetriebes exzentrisch zur Drehachse eingesetzt ist, und wobei das Innenrad zur Drehachse einen exzentrischen Aufnahmeraum bildet, mit einem in den exzentrischen Aufnahmeraum drehbar eingesetzten Exzenter und mit einer Antriebswelle zum Antrieb des Exzenters, wobei dem Außenrad ein Lehnenadapter und dem Innenrad ein Sitzadapter angebunden ist, so dass das Innenrad sitzteilfest bleibt, während das Außenrad einschließlich der Antriebswelle bei einer Verstellung taumelt, und wobei das Außenrad als ein Hohlrad mit einem Boden und mit einer in axialer Richtung über die Innenverzahnung hinaus verlängerten Außenwand ausgebildet ist.

Ein derartiger Verstellbeschlag ist aus der EP 1 676 503 A1 bekannt. Dabei ist das Außenrad mittels Vorsprüngen am Außenrand in Ausnehmungen eines ringförmigen Halteelements eingesetzt, welches an eine Oberflächenstruktur des zweiten Beschlagteils angepasst ist.

Ähnliche Verstellbeschläge sind beispielsweise auch aus der DE 100 21 403 C2, der DE 31 30 315 C2 oder der DE 28 34 529 C2 bekannt. Dabei sind das erste Beschlagteil und das zweite Beschlagteil nach Art eines Taumelgetriebes zusammengefügt, wobei sich bei Antrieb des Exzenters das Innenrad taumelnd über seine Außenverzahnung an der Innenverzahnung des Außenrads abrollt. Die Anzahl der Zähne der Außenverzahnung ist gegenüber der Anzahl der Zähne der Innenverzahnung verringert. Bei einem vollständigen Umlauf des Exzenters resultiert eine Relativdrehung des Innenrads gegenüber dem Außenrad um die Zahndifferenz. Ein Verstellbeschlag mit Taumelgetriebe hat sich in der Fahrzeugtechnik zur Verstellung der Lehne gegenüber dem Sitzunterteil eines Fahrzeugsitzes durchgesetzt. Ein Taumelgetriebe ist mit vergleichsweise wenigen mechanischen Bauteilen zu verwirklichen und ermöglicht bei zugleich flacher Bauweise eine zur Verstellung gewünschte Übersetzung.

Die Beschlagteile bzw. das Innen- und das Außenrad eines derartigen Verstellbeschlags sind im fertig montierten Zustand in axialer Richtung zusammengehalten. Dazu sind aus dem Stand der Technik unterschiedlichste Haltemittel bekannt. Ist das Axialspiel zwischen den Beschlagteilen zu groß, so kommt es zu unerwünschten Klappergeräuschen, was der Insasse eines Fahrzeuges unter Umständen besorgniserregend oder zumindest als Komfortverlust empfindet. Ist andererseits das Axialspiel zwischen den Beschlagteilen zu klein, so muss zur Verstellung des Beschlags eine unnötig hohe Reibungskraft überwunden werden.

Aus der genannten DE 100 21 403 C2 ist für den axialen Zusammenhalt der Beschlagteile ein die beiden Beschlagteile übergreifender Schließring bekannt, der über einen polygonalen Formschluss mit zumindest einem der Beschlagteile drehfest verbunden ist.

Gemäß der DE 10 105 282 B4 werden die Beschlagteile eines Verstellbeschlags über einen Haltering axial zusammengehalten, wobei ein Beschlagteil in den Haltering eingepresst ist. Dadurch soll eine einfachere Montage ermöglicht sein. Ergänzend wird vorgeschlagen, den Haltering innen mit einer Stufe auszubilden, bis zu welcher das Beschlagteil eingepresst wird. Durch die Stufe ist das Axialspiel des Beschlags einstellbar.

Aus der DE 31 30 315 C2 ist für den axialen Zusammenhalt der beiden Beschlagteile eines Verstellbeschlags die Verwendung einer Tellerscheibe bekannt, die fest mit einem Beschlagteil verbunden ist. Dabei bildet der Tellerrand eine Innenverzahnung, die mit einer überstehenden Außenverzahnung des Innenrads kämmt. Für den axialen Zusammenhalt der Beschlagteile wird die Tellerscheibe von einem Halteglied hintergriffen, welches in Schlitze des anderen Beschlagteils eingedrückt und in einer spielfreien Lage mit diesem Beschlagteil verbunden wird. Schließlich ist in der DE 28 34 529 C2 für den axialen Zusammenhalt der Beschlagteile eines Verstellbeschlags ein Lagerschild offenbart, welches seitliche Abwinklungen aufweist, die die beiden Beschlagteile seitlich übergreifen. Bei der Montage werden die Beschlagteile spielfrei zusammengedrückt und das äußere Beschlagteil in dieser Position fest mit den seitlichen Abwinklungen verbunden.

Aufgabe der Erfindung ist es, einen Verstellbeschlag der eingangs genannten Art anzugeben, der ein einfaches Einstellen des Axialspiels zwischen dem Außenrad und dem Innenrad ermöglicht.

Diese Aufgabe wird erfindungsgemäß durch einen Verstellbeschlag mit der Merkmalskombination gemäß Anspruch 1 gelöst. Demnach ist vorgesehen, ein in der Außenwand axial gegen das Innenrad verschiebbares Halteelement vorzusehen, welches an der Außenwand befestigt ist und das Innenrad gegen den Boden des Hohlrades lagert.

Bei der Montage wird das Innenrad axial in das Hohlrad bis zum Erreichen des Bodens eingeschoben und anschließend das Halteelement in das Innere des Hohlrades nachgeführt, so dass das Innenrad zwischen dem Boden und dem Halteelement gelagert ist. Durch die axiale Verschiebbarkeit des Halteelements ist das Axialspiel des Innenrades gegenüber dem Außenrad über dem Außenrad bis zu einem Nullspiel einstellbar. Ist die gewünschte Position des Halteelements gegenüber dem Boden des Außenrades erreicht, so wird das Halteelement an der Außenwand fixiert. Insbesondere kann dies mittels einer geeigneten Schweißtechnik erfolgen. Vorteilhafterweise erfolgt die Fixierung des Halteelements in dem Außenrad mittels Laserschweißen. Selbstverständlich ist alternativ auch eine Befestigung mittels Kleben oder Löten vorstellbar. Die Verbindung des Halteelements mit der Außenwand des Außenrads kann punktuell oder umlaufend vorgenommen werden.

Die Einstellung der gewünschten Position des Halteelements gegenüber dem Boden des Außenrades kann hierbei sowohl kraft- aus weggesteuert erfolgen. Im Falle einer kraftgesteuerten Einstellung werden fertigungsbedingte Toleranzen in der axialen Höhe des Innenrades ausgeglichen. Andererseits ermöglicht eine weggesteuerte Festlegung der gewünschten Position durch Variation der axialen Dicke des Innenrades bei sonst identischen Bauteilen in der Festigkeit veränderbare Varianten. Wird beispielsweise bei einer weggesteuerten Festlegung der Position des Halteelements die Dicke des Innenrades erhöht, so resultiert hieraus ein festigkeitsgesteigerter Verstellbeschlag.

Es ist nicht erforderlich, den Boden vollflächig auszugestalten. Grundsätzlich genügt es, den Boden als Auflager für den Innenring auszubilden. Hierzu genügt ein entsprechend gestalteter Rand oder eine entsprechend gestaltete Teilfläche. Bevorzugt schließt der Boden aber den Innenraum des Hohlrads im Wesentlichen ab. Auf diese Weise kann das Hohlrad zugleich eine äußere Begrenzung des Verstellbeschlags bilden. Der Innenraum und damit das Taumelgetriebe ist vor Schmutz und dergleichen geschützt.

Für die Erfindung ist es auch nicht erforderlich, dass die axiale Breite der Innenverzahnung der axialen Breite der Außenverzahnung entspricht. Beispielsweise kann das gesamte Innenrad eine gegenüber der Breite der Außenverzahnung verringerte Dicke aufweisen und mittels abgekröpfter Teilbereiche des Halteelements an der Außenverzahnung vorbei gegen den Boden gelagert werden. Andererseits ist es auch vorstellbar, dass die Außenverzahnung eine gegenüber der Innenverzahnung erhöhte axiale Breite aufweist, und das Innenrad über die radial abstehende Außenverzahnung am Halteelement gegengelagert ist. Bei dieser Ausgestaltung kann insbesondere die Außenverzahnung auf einer Art Flansch angebracht sein, über den das Innenrad gegen das Halteelement gelagert ist. Die Lagerung des Innenrades über die Außenverzahnung an dem Halteelement stellt insofern eine vorteilhafte Variante dar, da das Halteelement dann vergleichsweise einfach ausgeführt werden kann.

Da der Verstellbeschlag als solcher keine spezifischen Komponenten für einen bestimmten Fahrzeugsitz aufweist, kann dieser vielseitig eingesetzt sein. Über das Anbringen eines Sitz- bzw. einen Lehnenadapters kann der Verstellbeschlag für Fahrzeugsitze unterschiedlicher Modellvarianten eingesetzt werden. Bei der angegebenen Konfiguration bleibt das Innenrad sitzteilfest, während das Außenrad einschließlich der Antriebswelle bei einer Verstellung taumelt. Die angebundene Lehne bewegt sich gleichsinnig mit der Antriebswelle.

In einer bevorzugten Weiterbildung des Verstellbeschlags umfasst das Innenrad eine in axialer Richtung über die Außenverzahnung hinaus verlängerte Innenwand, die das Halteelement in axialer Richtung durchdringt, wobei das Innenrad über die Innenwand dem zweiten Beschlagteil zugeordnet ist. Bei dieser Variante ragt die verlängerte Innenwand im zusammengebauten Zustand des Verstellbeschlags in axialer Richtung über das Halteelement hinaus, so dass es leicht mit dem zweiten Beschlagteil oder mit einem entsprechenden Adapter zur Anbindung an den Fahrzeugsitz verbunden werden kann. Weiter vorteilhaft hierzu ist es, wenn die Innenwand in axialer Richtung weiter verlängert ist, und die Außenwand überragt. In diesem Fall ist eine vereinfachte Befestigung an der überstehenden Innenwand gegeben. Die Verbindung mit dem zweiten Beschlagteil oder einem Adapter kann wiederum mittels Kleben, Schweißen oder Löten erfolgen. Bevorzugt ist auch hier die Technik des Laserschweißens einzusetzen.

Für eine stabile und eine erhöhte Crashfestigkeit aufweisende Variante ist sowohl die Außenwand des Außenrads als auch die Innenwand des Innenrads umlaufend ausgebildet, wobei das Halteelement mit einer zu Außenwand komplementären Außenumrandung in die Außenwand eingesetzt und dort umlaufend mit dieser fest verbunden ist. Ein Aufschälen einer solchen Verbindung im Falle einer starken Krafteinleitung auf die Beschlagteile ist so gut wie ausgeschlossen. Das Innenrad ist sicher zwischen dem Boden des Außenrads und dem mit der Außenwand verbundenen Halteelement gelagert bzw. geführt.

Hinsichtlich der Außenkontur der Außen- und der Innenwand bestehen grundsätzlich keine Zwänge. Sowohl die Außen- als auch die Innenwand können zu einer gedachten oder vorhandenen Grundfläche jeweils axial prismatisch fortgesetzt sein. Insbesondere sind auch polygonale Umfangskonturen vorstellbar.

In einer bevorzugten Ausgestaltung sind die Außenwand des Hohlrades und die Innenwand des Innenrades jeweils als eine Zylinderwand ausgebildet. Durch die rotationssymmetrische Ausgestaltung der Bauteile ist eine einfachere Fertigung ermöglicht. Auch braucht bei der Zusammenfügung der Bauteile nicht auf eine definierte Drehlage dieser zueinander geachtet werden.

Zweckmäßigerweise ist das Halteelement als ein Haltering oder eine Haltescheibe ausgebildet, der bzw. die das Innenrad oder dessen Außenverzahnung zumindest am Rand umläuft. Infolge der Rotationssymmetrie ist hierdurch eine sichere und stabile Lagerung des Innenrades in dem Außenrad gegeben.

Zweckmäßigerweise ist am Boden des Hohlrades ein zentraler Kragenzug ausgebildet, so dass der exzentrische Aufnahmeraum zwischen dem Kragenzug und dem Innenrad ausgebildet ist. In einem derartigen Kragenzug ist beispielsweise die Antriebswelle für den Verstellbeschlag sicher geführt. Auf der anderen Seite bietet ein solcher Kragenzug die Möglichkeit, eine Gleitlagerbuchse zur Lagerung des Exzenters vorzusehen.

Bevorzugt ist der Exzenter in dem exzentrischen Aufnahmeraum hierbei zwischen einer inneren und einer äußeren Gleitlagerbuchse gelagert. Eine solche Lagerung mittels Gleitlagerbuchsen verringert die Reibung des umlaufenden Exzenters gegenüber dem Außen- und dem Innenrad.

In den exzentrischen Aufnahmeraum kann ein starrer oder ein eine variable Gesamtexzentrizität bildender Exzenter eingesetzt sein. Insbesondere zur Ausbildung einer variablen Gesamtexzentrizität sind aus dem Stand der Technik verschiedene Ausführungen bekannt. In einer besonders vorteilhaften Ausgestaltung sind in den Aufnahmeraum zwei eine variable Gesamtexzentrizität bildende, gegeneinander drehbare Teilexzentrizitäten eingesetzt, die zur Ausbildung einer maximalen Gesamtexzentrizität zueinander vorgespannt sind, wobei weiter ein mit der Antriebswelle drehfest verbundener Mitnehmer vorgesehen ist, der bei einem Antrieb auf die Teilexzentrizitäten gegen die Vorspannung wirkt. Wird die Antriebswelle nicht betätigt, so sind die Teilexzentrizitäten unter Ausbildung der maximalen Gesamtexzentrizität vorgespannt. In dieser Position drückt der Exzenter das Innenrad im Wesentlichen spielfrei gegen das Außenrad, so dass eine ungewollte Bewegung der beiden Beschlagteile zueinander erschwert ist. Wird die Antriebswelle bewegt, so werden die Teilexzentrizitäten gegen die Vorspannung verdreht, wodurch sich die Gesamtexzentrizität verkleinert. Zwischen dem Innen- und dem Außenrad entsteht ein Spiel, so dass die Verstellung der Beschlagteile zueinander ermöglicht ist.

Wie bereits erwähnt, ist in einer bevorzugten Ausgestaltung das Halteelement mit der Außenwand des Hohlrades verschweißt, wobei bevorzugt die Methode des Laserschweißens verwendet wird. Beispielsweise kann dies mittels einer umlaufenden Kehlnaht vorgenommen werden. Insbesondere liegt eine Verbindung mittels einer sogenannten I-Naht vor, die durch Laserschweißen erzeugt ist. Das Hohlrad selbst ist ebenfalls bevorzugt durch Laserschweißen mit dem ersten Beschlagteil verbunden.

Zur Lagerung der Bauteile des Verstellbeschlags ist zweckmäßigerweise ein durchgehender Lagerzapfen vorgesehen, auf welchem insbesondere mittels des erwähnten zentralen Kragenzugs das Außenrad gelagert ist.

Bevorzugt ist dem Außenrad der Lehnenadapter und dem Innenrad der Sitzadapter angeschweißt.

Bislang werden Außenrad und Innenrad eines mit einem Taumelgetriebe ausgestatteten Verstellbeschlags als Feinschneidteile ausgeführt, die entsprechend verformt werden. Derartig hergestellte Innen- und Außenräder weisen an allen Stellen eine annähernd konstante Materialdicke auf, die im Wesentlichen der ursprünglichen Blechdicke entspricht. Eine konstante Materialdicke wird jedoch nicht den tatsächlichen Belastungen gerecht. Auch ermöglicht eine solche Herstellung keine toleranzgenaue Positionierung unterschiedlicher Geometrien am Bauteil, wie beispielsweise die Lage einer verlängerten Wand gegenüber einer Verzahnung.

Die geschilderten Nachteile der bisherigen Herstellungsmethoden zur Fertigung eines Außen- oder eines Innenrads für ein Taumelgetriebe können jedoch über wunden werden, wenn das Innenrad oder das Außenrad jeweils als ein Kaltfließpressteil hergestellt werden. Beim Fließpressen handelt es sich um eine Massivumformung, die durch einen einstufigen oder mehrstufigen Fertigungsvorgang sowohl Hohl- als auch Vollkörper erstellt. Prinzipiell wird bei diesem Verfahren der Werkstoff, insbesondere Metall, unter Einwirkung eines hohen Druckes zum Fließen gebracht. Dabei drückt ein Stempel den Werkstückrohling durch eine formgebende, im Querschnitt verminderte Werkzeugöffnung, eine Matrize. Das Umformen selbst erfolgt meist bei Raumtemperatur, so dass man von einem Kaltfließpressen spricht. Hierbei wird eine hohe Maßgenauigkeit und eine hohe Oberflächengüte erreicht.

Der Vorteil der Anwendung des Kaltfließpressens zur Herstellung des Innenrads und/oder des Außenrads für einen Verstellbeschlag liegt in der Möglichkeit für festigkeitsoptimierte Konstruktionen, die unter Umständen Gewichtsvorteile erbringen. Durch Materialeinsparungen können zudem Kostenvorteile erzielt werden. Zudem können durch den Einsatz des Kaltfließpressens engere Toleranzen bei der Verzahnung und der Koaxialität realisiert werden, wodurch die Homogenität der Betätigung des Verstellbeschlags verbessert wird. Da es sich bei einem Verstellbeschlag um ein Massenbauteil handelt, werden Kostenvorteile dadurch erzielt, dass nur mehr ein einziges Werkzeug zur Herstellung benötigt wird.

Bei dem vorgenannten Innenrad mit verlängerter Innenwand erlaubt das Kaltfließpressen insbesondere eine erleichterte Herstellung einer Geometrie, wobei die Außenverzahnung von einem umlaufenden Ring gedeckt ist. Hierdurch ist die Verzahnung umlaufend angebunden, so dass die Festigkeit bei gleichem Bauraum gesteigert wird. Eine entsprechende Geometrie lässt sich mit anderen Kaltumformprozessen nicht erzielen. Allenfalls kommt eine spanende Bearbeitung in Frage.

Für ein Außenrad, welches vorliegend als Hohlrad ausgebildet ist, ermöglicht die Verwendung des Kaltfließpressens die Verstärkung des Materials an besonders belasteten Bereichen. Dies kann beispielsweise im Bereich des inneren Kragenzuges oder im Bereich der Verzahnung vorgesehen werden.

Ein Ausführungsbeispiel der Erfindung ist anhand einer Zeichnung näher erläutert. Dabei zeigen:
- Fig. 1: in einer Explosionsdarstellung einen Verstellbeschlag für einen Fahrzeugsitz, wobei das Außenrad als ein Hohlrad ausgebildet ist, in dem das Innenrad mittels eines Halteelements gegengelagert ist,
- Fig. 2: den Verstellbeschlag gemäß Fig. 1 in einem Querschnitt,
- Fig. 3: ein mittels Kaltfließpressen hergestelltes Außenrad in einem Querschnitt und
- Fig. 4: ein mittels Kaltfließpressen hergestelltes Innenrad in einem Querschnitt.

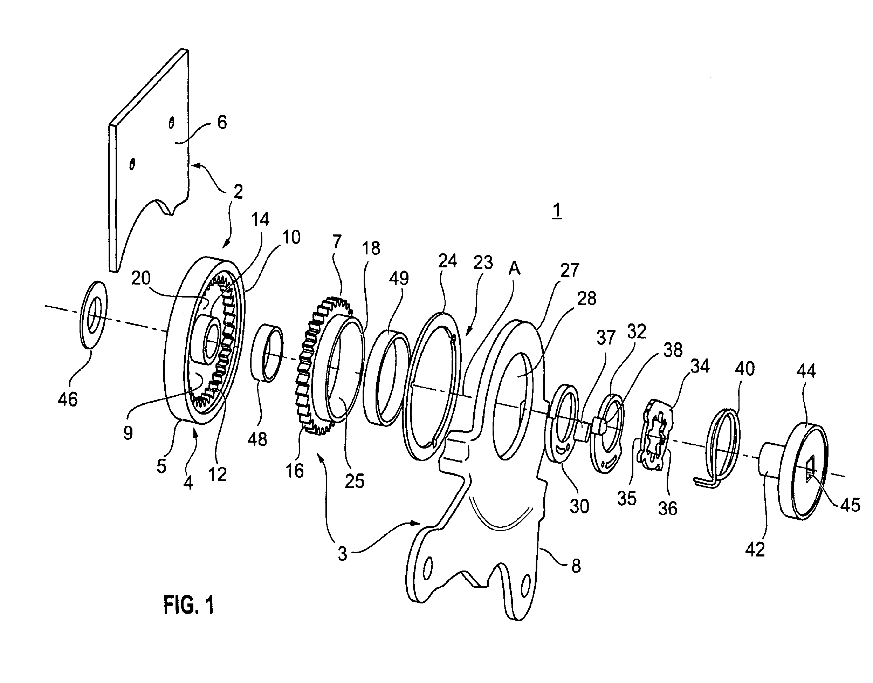

In Fig. 1 ist in einer Explosionsdarstellung ein Verstellbeschlag 1 für einen Fahrzeugsitz dargestellt. Der Verstellbeschlag 1 umfasst hierbei ein erstes Beschlagteil 2 und ein zweites Beschlagteil 3, die relativ zueinander um eine Drehachse A drehverstellbar sind. Das erste Beschlagteil 2 besteht aus einem Außenrad 4, welchem zur späteren Montage an einer Sitzlehne ein entsprechender Lehnenadapter 6, insbesondere mittels einer Schweißung, angebunden ist. Das zweite Beschlagteil 3 umfasst ein Innenrad 7 sowie einen mit diesem verbundenen Sitzadapter 8 zur Anbindung an ein Sitzunterteil.

Das Außenrad 4 ist als ein Hohlrad 5 mit einem Boden 9 und einer umlaufenden zylindrischen Außenwand 10 ausgebildet. An der Innenseite der Außenwand 10 ist eine axial zurückgesetzte Innenverzahnung 12 vorgesehen. Die Außenwand 10 ist in axialer Richtung über die Innenverzahnung 12 hinaus verlängert. Im Inneren des Hohlrads 5 ist weiter ein Kragenzug 14 angebracht, der eine zentrale Bohrung umläuft. In das Hohlrad 5 wird das Innenrad 7 eingefügt, welches eine umlaufende Außenverzahnung 16 und eine in axialer Richtung über die Außenverzahnung 16 hinaus verlängerte, zylindrische Innenwand 18 umfasst.

Zur Montage des Verstellbeschlags 1 wird das Innenrad 7 in den Innenraum 20 des Hohlrades 4 eingesetzt. Da der Außendurchmesser des Innenrads 7 gegenüber dem Innendurchmesser 12 des Hohlrades 4 einen verringerten Durchmesser hat, wälzt sich letzteres taumelnd unter Abrollung der Außenverzahnung 16 an der Innenverzahnung 12 in dem Hohlrad 5 ab. Die Anzahl der Zähne der Außenverzahnung 16 ist gegenüber der Anzahl der Zähne der Innenverzahnung 12 verringert, so dass sich das Innenrad 7 bei einem vollständigen Umlauf gegenüber dem Hohlrad 5 um die Zahndifferenz relativ verdreht.

Das Innenrad 7 wird axial bis zum Boden 9 in das Hohlrad 5 eingeführt. Anschließend wird ein Halteelement 23, welches als ein Haltering 24 ausgebildet ist, dem Innenrad 7 in den Innenraum 20 des Hohlrades 5 nachgeführt, wobei es die Innenwand 18 des Innenrades 7 umschließt. Der Haltering 24 weist einen gegenüber dem Innendurchmesser der Außenwand 10 geringfügig verringerten Außendurchmesser auf. Sein Innendurchmesser erlaubt die taumelnde Bewegung der umschlossenen Innenwand 18 des eingesetzten Innenrades 7. Die Außenverzahnung 16 des Innenrads 7 befindet sich auf einem umlaufenden Flansch, über den das Innenrad 7 an dem Haltering 24 gegengelagert ist.

Der Haltering 24 wird in axialer Richtung so weit gegen den Boden 9 des Hohlrads 5 bewegt, bis ein definiertes Axialspiel des Innenrads 7 eingestellt ist. Dies kann sowohl kraft- als auch weggesteuert geschehen. Bei einer kraftgesteuerten Einfügung werden Fertigungstoleranzen in der axialen Breite der Außenverzahnung 16 ausgeglichen. In der gewünschten Endposition wird der Haltering 24 umlaufend mit der Innenseite der Außenwand 10 verschweißt.

Durch das in das Hohlrad 5 eingesetzte Innenrad 7 wird zwischen dem Kragenzug 14 und der Innenwand 18 ein exzentrischer Aufnahmeraum 25 zur Aufnahme eines antreibenden Exzenters gebildet.

Der Sitzadapter 8 umfasst einen äußeren Ring 27, der über eine zentrale Öffnung 28 die Innenwand 18 des Innenrads 7 übergreift. Im montierten Zustand ist die Innenwand 18 mit dem äußeren Ring 27 des Sitzadapters 8 fest verschweißt.

In den exzentrischen Aufnahmeraum 25 sind zur Ausbildung einer variablen Gesamtexzentrizität ein erster Teilexzenter 30 und ein zweiter Teilexzenter 32 eingesetzt. Diese gemeinsam den Exzenter bildenden Teilexzenter 30,32 werden mittels einer aufgelegten Mitnehmerscheibe 34 gegeneinander verdreht, wodurch sich ihre Gesamtexzentrizität verändert. Hierzu weist die Mitnehmerscheibe 34 seitliche Aussparungen 35,36 auf, in die Mitnehmernasen 37,38 des ersten bzw. des zweiten Teilexzenters 30,32 eingreifen. Die Teilexzenter 30,32 sind mittels eines Federelements 40 zur Ausbildung einer maximalen Gesamtexzentrizität vorgespannt, wobei in dieser Position das Innenrad 7 spielfrei gegen das Außenrad 4 gedrückt ist.

Zum Antrieb des Verstellbeschlags 1 ist ein durchgehender Lagerzapfen 42 vorgesehen, der einen exzentrischen, in die Innenwand 18 seitlich eingreifenden Deckel 44 umfasst. In den Deckel 44 ist zum Antrieb eine Vierkantöffnung 45 eingefügt. Der Lagerzapfen 42 ist drehfest mit der Mitnehmerscheibe 34 verbunden. Zur Halterung des Lagerzapfens 42 ist gegenüberliegend ein Haltering 46 vorgesehen.

Um die Reibung der Teilexzentrizitäten 30,32 auf dem Kragenzug 14 und auf der Innenwand 18 zu verringern, sind eine innere Gleitlagerbuchse 48 und eine äußere Gleitlagerbuchse 49 vorgesehen. Die innere Gleitlagerbuchse 48 ist dabei dem Kragenzug 14 aufgesetzt. Die äußere Gleitlagerbuchse 49 ist in die Innenwand 18 eingesetzt.

Bei einer Betätigung des Lagerzapfens 42 werden über die Mitnehmerscheibe 34 die beiden Teilexzentrizitäten 30,32 unter Verringerung der ausgebildeten Gesamtexzentrizität gegen die Federspannung bewegt. Hieraus resultiert ein Spiel des Innenrads 7 gegenüber dem Hohlrad 5, so dass der Exzenter unter taumelndem Abrollen des Innenrads 7 in dem Hohlrad 5 rotiert werden kann. Die Beschlagteile 2,3 werden relativ zueinander die Drehachse A verstellt.

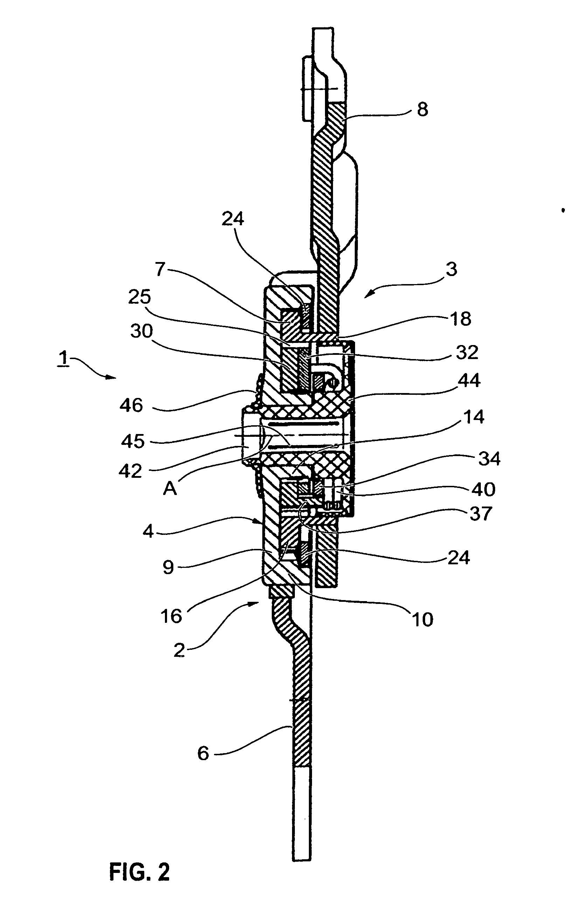

In Fig. 2 ist der Verstellbeschlag 1 gemäß Fig. 1 in einem Querschnitt dargestellt. Man erkennt den Sitzadapter 8, der dem Innenrad 7 angebunden ist, und den Lehnenadapter 6, welcher mit dem Hohlrad 5 fest verbunden ist.

Das Innenrad 7 ist in die Außenwand 10 des Hohlrades 4 eingesetzt und zwischen dessen Boden 9 und dem Haltering 24 gelagert. Dabei stützt sich die Außenverzahnung 16 in axialer Richtung gegen den Haltering 24 ab. Über die axiale Positionierung des Halterings 24 ist das Axialspiel des Innenrads 7 gegenüber dem Hohlrad 5 eingestellt. Der Haltering 24 ist in der eingestellten Position mit der Außenwand 10 des Hohlrads 5 verschweißt. Der Sitzadapter 8 ist der in axialer Richtung über die Außenverzahnung 16 hinaus verlängerten Außenwand 18 des Innenrades 7 angeschweißt.

In den zwischen dem Kragenzug 14 und der Innenwand 18 gebildeten exzentrischen Aufnahmeraum 25 sind als Exzenter die beiden Teilexzentrizitäten 30 und 32 eingesetzt. Über das Federelement 40 sind diese zur Ausbildung einer maximalen Gesamtexzentrizität vorgespannt. Im gezeigten Querschnitt wird die Mitnehmerscheibe 34 ersichtlich, die mit der Mitnehmernase 37 der ersten Teilexzentrizität 30 zusammenwirkt.

Das Hohlrad 5 ist mittels des Kragenzugs 14 auf dem durchgehenden Lagerzapfen 42 gelagert. Es wird ersichtlich, dass der Lagerzapfen 42 auf der Seite des Hohlrades 4 mittels des Halterings 46 gesichert ist. Gegenüberliegend geht der Lagerzapfen 42 in den Deckel 44 über, der mit seitlich herabgezogenen Wänden in die Innenwand 18 des Innenrads 7 eintaucht. Der Deckel ist dabei entsprechend der ausgebildeten Gesamtexzentrizität der Teilexzenter 30,32 ebenfalls exzentrisch ausgebildet. Im Inneren des Lagerzapfens 42 wird der Vierkant 45 zur Anbindung an einen Antrieb ersichtlich.

Bei einer Betätigung des Lagerzapfens 42 verringert sich über die die Teilexzenter 30,32 zueinander verstellende Mitnehmerscheibe 34 die Gesamtexzentrizität, so dass der gebildete Exzenter das Innenrad 7 zu einem Umlauf im Hohlrad 5 antreibt. Da das Innenrad 7 über den Sitzadapter 8 sitzfest angebunden ist, resultiert eine mit dem Lagerzapfen 42 gleichsinnige Verdrehung des Lehnenadapters 6 bzw. der damit verbundenen Lehne des Fahrzeugsitzes.

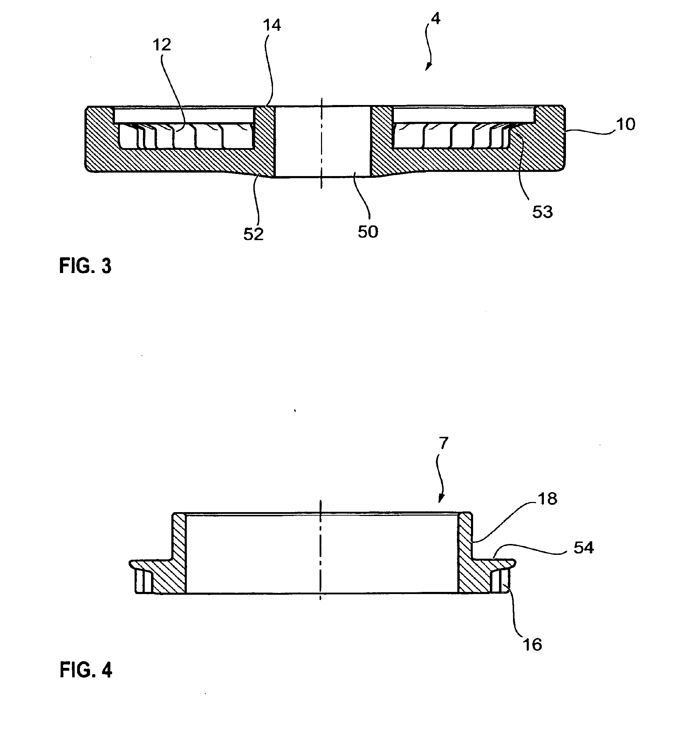

Fig. 3 zeigt in einem Querschnitt ein mittels Kaltfließpressen hergestelltes Außenrad 4. Es wird der eine zentrale Bohrung 50 umlaufende Kragenzug 14 sowie die hochgezogene Außenwand 10 ersichtlich, an deren inneren Umfang die Innenverzahnung 12 angeformt ist. Mittels Kaltfließpressen ist die Materialstärke des Außenrads 4 im Bereich 52 zum Kragenzug 14 und im Zahnungsbereich 53 erhöht. Das mittels Kaltfließpressen hergestellte Außenrad 4 zeigt insofern eine belastungsgerechte Materialverteilung.

In Fig. 4 ist ein kaltfließgepresstes Innenrad 7 in einem Querschnitt dargestellt. Es wird die hochgezogene Innenwand 18 erkenntlich, die an ihrer Außenseite eine angeformte Außenverzahnung 16 trägt. Durch einen aufliegenden Ring 54 ist die Außenverzahnung 16 umlaufend an eine Stützgeometrie angebunden. Die Festigkeit des Innenrads 7 ist somit bei gleichem Bauraum gesteigert. Durch das Vorsehen des Rings 54 wird zudem ein guter Materialfluss zur Herausformung der Außenverzahnung 16 während des Kaltfließpressens erzielt.

**Bezugszeichenliste**

| | | | |
|---|---|---|---|
| 1 | Verstellbeschlag | | |
| 2 | erstes Beschlagteil | 48 | innere Gleitlagerbuchse |
| 3 | zweites Beschlagteil | 49 | äußere Gleitlagerbuchse |
| 4 | Außenrad | 50 | Bohrung |
| 5 | Hohlrad | 52 | Bereich |
| 6 | Lehnenadapter | 53 | Verzahnungsbereich |
| 7 | Innenrad | 54 | Ring |
| 8 | Sitzadapter | | |
| 9 | Boden | A | Drehachse |
| 10 | Außenwand | | |
| 12 | Innenverzahnung | | |
| 14 | Kragenzug | | |
| 16 | Außenverzahnung | | |
| 18 | Innenwand | | |
| 20 | Innenraum | | |
| 23 | Halteelement | | |
| 24 | Haltering | | |
| 25 | exzentr. Aufnahmeraum | | |
| 27 | äußerer Ring | | |
| 28 | zentrale Öffnung | | |
| 30 | erster Teilexzenter | | |
| 32 | zweiter Teilexzenter | | |
| 34 | Mitnehmerscheibe | | |
| 35,36 | seitliche Aussparung | | |
| 37,38 | Mitnehmernase | | |
| 40 | Federelement | | |
| 42 | Lagerzapfen | | |
| 44 | Deckel | | |
| 45 | Vierkantöffnung | | |
| 46 | Haltering | | |

## Patentansprüche

1. Verstellbeschlag (1), insbesondere für einen Fahrzeugsitz, mit einem ersten Beschlagteil (2), mit einem relativ zum ersten Beschlagteil (2) um eine Drehachse (A) drehverstellbaren zweiten Beschlagteil (3), wobei dem ersten Beschlagteil (2) ein Außenrad (4) mit einer Innenverzahnung (12) zugeordnet ist, in welches ein dem zweiten Beschlagteil (3) zugeordnetes Innenrad (7) mit einer Außenverzahnung (16) nach Art eines Taumelgetriebes exzentrisch zur Drehachse (A) eingesetzt ist, und wobei das Innenrad (7) zur Drehachse (A) einen exzentrischen Aufnahmeraum (25) bildet, mit einem in den exzentrischen Aufnahmeraum (25) drehbar eingesetzten Exzenter (30,32), und mit einer Antriebswelle zum Antrieb des Exzenters (30,32), wobei dem Außenrad (4) ein Lehnenadapter (6) und dem Innenrad (7) ein Sitzadapter (8) angebunden ist, so dass das Innenrad (7) sitzteilfest bleibt, während das Außenrad (4) einschließlich der Antriebswelle bei einer Verstellung taumelt, und wobei das Außenrad (4) als ein Hohlrad (5) mit einem Boden (9) und mit einer in axialer Richtung über die Innenverzahnung (12) hinaus verlängerten Außenwand (10) ausgebildet ist,
**dadurch gekennzeichnet,**
**dass** ein in der Außenwand (10) axial gegen das Innenrad (7) schiebbares Halteelement (23) vorgesehen ist, welches an der Außenwand (10) befestigt ist und das Innenrad (7) gegen den Boden (9)des Hohlrades (4) lagert.

2. Verstellbeschlag (1) nach Anspruch 1,
**dadurch gekennzeichnet,**
**dass** das Innenrad (7) über die Außenverzahnung (16) an dem Halteelement (23) gelagert ist.

3. Verstellbeschlag (1) nach Anspruch 1 oder 2,
**dadurch gekennzeichnet,**
**dass** das Innenrad (7) eine in axialer Richtung über die Außenverzahnung (16) hinaus verlängerte Innenwand (18) umfasst, die das Halteelement (23) in axialer Richtung durchdringt, und dass das Innenrad (7) über die Innenwand (18) dem zweiten Beschlagteil (3) zugeordnet ist.

4. Verstellbeschlag (1) nach einem der vorhergehenden Ansprüche,
**dadurch gekennzeichnet,**
**dass** die Außenwand (10) des Hohlrades (5) und die Innenwand (18) des Innenrades (7) jeweils als eine Zylinderwand ausgebildet sind.

5. Verstellbeschlag (1) nach einem der vorhergehenden Ansprüche,
**dadurch gekennzeichnet,**
**dass** das Halteelement (23) als ein Haltering (24) ausgebildet ist.

6. Verstellbeschlag (1) nach einem der vorhergehenden Ansprüche,
**dadurch gekennzeichnet,**
**dass** am Boden (9) des Hohlrades (5) ein Kragenzug ausgebildet ist, so dass der exzentrische Aufnahmeraum (25) zwischen dem Kragenzug und dem Innenrad (7) ausgebildet ist.

7. Verstellbeschlag (1) nach einem der vorhergehenden Ansprüche,
**dadurch gekennzeichnet,**
**dass** der Exzenter in dem exzentrischen Aufnahmeraum (25) zwischen einer inneren (48) und einer äußeren Gleitlagerbuchse (49) gelagert ist.

8. Verstellbeschlag (1) nach einem der vorhergehenden Ansprüche
**dadurch gekennzeichnet,**
**dass** in den Aufnahmeraum (25) zwei eine variable Gesamtexzentrizität bildende, gegeneinander drehbare Teilexzentrizitäten (30,32) eingesetzt sind, die zur Ausbildung einer maximalen Gesamtexzentrizität zueinander vorgespannt sind, und dass ein mit der Antriebswelle drehfest verbundener Mitnehmer vorgesehen ist, der bei einem Antrieb auf die Teilexzentrizitäten (30,32) gegen die Vorspannrichtung wirkt.

9. Verstellbeschlag(1) nach einem der vorhergehenden Ansprüche,
**dadurch gekennzeichnet,**
**dass** das Halteelement (23) mit der Außenwand (10) des Hohlrades (5) verschweißt ist.

10. Verstellbeschlag (1) nach einem der vorhergehenden Ansprüche,
**dadurch gekennzeichnet,**
**dass** die Antriebswelle als ein durchgehender Lagerzapfen (42) ausgebildet ist.

11. Verstellbeschlag (1) nach einem der vorhergehenden Ansprüche,
**dadurch gekennzeichnet,**
**dass** dem Außenrad (4) der Lehnenadapter (6) und dem Innenrad (7) der Sitzadapter (8) angeschweißt ist.

12. Verstellbeschlag (1) nach einem der vorhergehenden Ansprüche,
**dadurch gekennzeichnet,**
**dass** die Außenverzahnung (16) der Innenwand (18) des Innenrads (7) von einem umlaufenden Ring (54) gedeckt ist.

13. Verstellbeschlag (1) nach einem der vorhergehenden Ansprüche,
**dadurch gekennzeichnet,**
**dass** das komplette Innenrad (7) mit Innenwand (18) und gesamter Außenverzahnung (16) als ein Kaltfließpressteil hergestellt ist.

14. Verstellbeschlag (1) nach einem der vorhergehenden Ansprüche,
**dadurch gekennzeichnet,**
**dass** das Außenrad (4) als ein Kaltfließpressteil hergestellt ist.

## Claims

1. Adjustment fitting (1), in particular for a vehicle seat, having a first fitting part (2), having a second fitting part (3) which is rotationally adjustable around a rotational axis (A) relative to the first fitting part (2), wherein an outer wheel (4) having an inner toothing (12) is allocated to the first fitting part (2) into which an inner wheel (7) allocated to the second fitting part (3) and having an outer toothing (16) in the form of a wobble mechanism is inserted eccentrically to the axis of rotation (A), and wherein the inner wheel (7) forms an eccentric receiving space (25) with respect to the axis of rotation (A), having a cam (30, 32) which is inserted rotatably into the eccentric receiving space (25), and having a drive shaft to drive the cam (30, 32), wherein a backrest adapter (6) is attached to the outer wheel (4) and a seat adapter (8) is attached to the inner wheel (7) such that the inner wheel (7) remains fixed in terms of the seat part, whilst the outer wheel (4) including the drive shaft wobbles during an adjustment, and wherein the outer wheel (4) is formed as a ring gear (5) having a base (9) and having an outer wall (10) which extends outwards in the axial direction beyond the inner toothing (12),
**characterised in that**
a holding element (23) which is able to slide axially against the inner wheel (7) in the outer wall (10) is provided, which is fastened to the outer wall (10) and supports the inner wheel (7) against the base (9) of the ring gear (4).

2. Adjustment fitting (1) according to claim 1,
**characterised in that**
the inner wheel (7) is mounted on the holding element (23) via the outer toothing (16).

3. Adjustment fitting (1) according to claim 1 or 2,
**characterised in that**
the inner wheel (7) comprises an inner wall (18) which extends outwards in the axial direction beyond the outer toothing (16) and which penetrates the holding element (23) in the axial direction, and that the inner wheel (7) is allocated to the second fitting part (3) via the inner wall (18).

4. Adjustment fitting (1) according to one of the preceding claims,
**characterised in that**
the outer wall (10) of the ring gear (5) and the inner wall (18) of the inner wheel (7) are each formed as a cylinder wall.

5. Adjustment fitting (1) according to one of the preceding claims,
**characterised in that**
the holding element (23) is formed as a retaining ring (24).

6. Adjustment fitting (1) according to one of the preceding claims,
**characterised in that**
a collar is formed on the base (9) of the ring wheel (5) such that the eccentric receiving space (25) is formed between the collar and the inner wheel (7).

7. Adjustment fitting (1) according to one of the preceding claims,
**characterised in that**
the cam is mounted in the eccentric receiving space (25) between an inner (48) and an outer plain bearing bushing (49).

8. Adjustment fitting (1) according to one of the preceding claims
**characterised in that**
two partial cams (30, 32) which form a variable total eccentricity and are rotatable with respect to each other are inserted into the receiving space (25), said partial cams (30, 32) being biased with respect to each other for the formation of a maximum total eccentricity, and that a driver which is connected non-rotatably to the drive shaft is provided which acts on the partial cams (30, 32) against the biasing direction in the case of a drive.

9. Adjustment fitting (1) according to one of the preceding claims,
**characterised in that**
the holding element (23) is welded to the outer wall (10) of the ring gear (5).

10. Adjustment fitting (1) according to one of the preceding claims,
**characterised in that**
the drive shaft is formed as a continuous bearing journal (42).

11. Adjustment fitting (1) according to one of the preceding claims,
**characterised in that**
the backrest adapter (6) is welded to the outer wheel (4) and the seat adapter (8) is welded to the inner wheel (7).

12. Adjustment fitting (1) according to one of the preceding claims,
**characterised in that**
the outer toothing (16) of the inner wall (18) of the inner wheel (7) is covered by a circulating ring (54).

13. Adjustment fitting (1) according to one of the preceding claims,
**characterised in that**
the complete inner wheel (7) with inner wall (18) and total outer toothing (16) is produced as a cold extrusion part.

14. Adjustment fitting (1) according to one of the preceding claims,
**characterised in that**
the outer wheel (4) is produced as a cold extrusion part.

## Revendications

1. Mécanisme ou armature de réglage (1), notamment destiné à un siège de véhicule, comprenant une première pièce de mécanisme (2) et une deuxième pièce de mécanisme (3), qui peut être déplacée en rotation par rapport à la première pièce de mécanisme (2) autour d'un axe de rotation (A), mécanisme
dans lequel à la première pièce de mécanisme (2) est associée une roue extérieure (4) avec une denture intérieure (12), à l'intérieur de laquelle est insérée, de manière excentrée par rapport à l'axe de rotation (A) à la façon d'une transmission à rotation-oscillation, une roue intérieure (7) avec une denture extérieure (16), associée à la deuxième pièce de mécanisme (3), et dans lequel la roue intérieure (7) forme un logement d'accueil (25) excentrique par rapport à l'axe de rotation (A), avec un excentrique (30, 32) inséré de manière rotative dans le logement d'accueil (25) excentrique et avec un arbre d'entraînement destiné à entraîner l'excentrique (30, 32),
dans lequel un adaptateur de dossier (6) est attaché à la roue extérieure (4) et un adaptateur d'assise de siège (8) est attaché à la roue intérieure (7), de sorte que la roue intérieure (7) reste fixe avec la partie d'assise, tandis que la roue extérieure (4), y compris l'arbre d'entraînement, tourne en oscillant lors d'un réglage, et
dans lequel la roue extérieure (4) est réalisée en tant que couronne (5) avec un fond (9) et une paroi extérieure (10) prolongée en direction axiale au-delà de la denture intérieure (12),
**caractérisé**
**en ce qu'**il est prévu un élément de maintien (23), qui peut coulisser axialement dans la paroi extérieure (10) contre la roue intérieure (7), et qui est fixé à la paroi extérieure (10) en assurant le montage de la roue intérieure (7) contre le fond (9) de la couronne (4).

2. Mécanisme de réglage (1) selon la revendication 1,
**caractérisé**
**en ce que** la roue intérieure (7) est montée par l'intermédiaire de la denture extérieure (16) contre l'élément de maintien (23).

3. Mécanisme de réglage (1) selon la revendication 1 ou la revendication 2,
**caractérisé**
**en ce que** la roue intérieure (7) comporte une paroi intérieure (18) prolongée axialement au-delà de la denture extérieure (16) et traversant l'élément de maintien (23) dans la direction axiale, et en ce que la roue intérieure (7) est associée à la deuxième pièce de mécanisme (3) par l'intermédiaire de la paroi intérieure (18).

4. Mécanisme de réglage (1) selon l'une des revendications précédentes,
**caractérisé**
**en ce que** la paroi extérieure (10) de la couronne (5) et la paroi intérieure (18) de la roue intérieure (7) sont réalisées chacune sous forme de paroi cylindrique.

5. Mécanisme de réglage (1) selon l'une des revendications précédentes,
**caractérisé**
**en ce que** l'élément de maintien (23) est réalisé sous forme d'anneau de maintien (24).

6. Mécanisme de réglage (1) selon l'une des revendications précédentes,
**caractérisé**
**en ce que** sur le fond (9) de la couronne (5) est formée une collerette étirée, de sorte que le logement d'accueil (25) excentrique est formé entre la collerette étirée et la roue intérieure (7).

7. Mécanisme de réglage (1) selon l'une des revendications précédentes,
**caractérisé**
**en ce que** l'excentrique est monté dans le logement d'accueil (25) excentrique, entre un coussinet de palier lisse intérieur (48) et extérieur (49).

8. Mécanisme de réglage (1) selon l'une des revendications précédentes,
**caractérisé**
**en ce que** dans le logement d'accueil (25) sont insérés deux excentriques partiels (30, 32) rotatifs l'un par rapport à l'autre et formant une excentricité totale variable, et qui pour former une excentricité totale maximale sont précontraints l'un par rapport à l'autre, et en ce qu'il est prévu un entraîneur qui est lié de manière fixe en rotation à l'arbre d'entraînement, et qui, lors d'un entraînement, agit sur les excentriques partiels (30, 32) à l'encontre de la direction de la précontrainte.

9. Mécanisme de réglage (1) selon l'une des revendications précédentes,
**caractérisé**
**en ce que** l'élément de maintien (23) est soudé à la paroi extérieure (10) de la couronne (5).

10. Mécanisme de réglage (1) selon l'une des revendications précédentes,
**caractérisé**
**en ce que** l'arbre d'entraînement est réalisé sous la forme d'un tourillon de palier (42) traversant.

11. Mécanisme de réglage (1) selon l'une des revendications précédentes,
**caractérisé**
**en ce que** sur la roue extérieure (4) est soudé l'adaptateur de dossier (6), et sur la roue intérieure (7) l'adaptateur d'assise de siège (8).

12. Mécanisme de réglage (1) selon l'une des revendications précédentes,
**caractérisé**
**en ce que** la denture extérieure (16) de la paroi intérieure (18) de la roue intérieure (7) est couverte par un anneau périphérique (54).

13. Mécanisme de réglage (1) selon l'une des revendications précédentes,
**caractérisé**
**en ce que** la roue intérieure (7) complète, avec la paroi intérieure (18) et l'ensemble de la denture extérieure (16), est fabriquée en tant que pièce matricée à froid.

14. Mécanisme de réglage (1) selon l'une des revendications précédentes,
**caractérisé**
**en ce que** la roue extérieure (4) est fabriquée en tant que pièce matricée à froid.
